# EUROPEAN PATENT APPLICATION

(11) **EP 4 425 654 A1**
(43) Date of publication of application: **04.09.2024**
(21) Application number: 23745942.5
(22) Date of filing: 10.01.2023
(51) Int. Cl.: H01M 50/148, H01M 50/169, H01M 50/548, H01M 50/531, H01M 50/249

(54) **BATTERY CELL, BATTERY AND ELECTRIC DEVICE**

(30) Priority: 27.01.2022 CN 202220226628 U
(71) Applicant: Contemporary Amperex Technology Co., Limited, Ningde City, Fujian 352100 (CN)
(72) Inventor: HUANG, Quanzhuang, NINGDE CITY, Fujian 352100 (CN); CHENG, Qi, NINGDE CITY, Fujian 352100 (CN); LIN, Jiang, NINGDE CITY, Fujian 352100 (CN); LIN, Chuandong, NINGDE CITY, Fujian 352100 (CN); WANG, Weiwei, NINGDE CITY, Fujian 352100 (CN)
(74) Representative: Gong, Jinping
(86) International application number: PCT/CN2023/071619
(87) International publication number: WO 2023/143059

(57) **Abstract**

The present application provides a battery cell, a battery and a power consuming device. The battery cell includes a shell and an end cap assembly, the shell being provided with an opening, and the end cap assembly including an end cap, an insulating member and an inner terminal, wherein the end cap is arranged at the opening, and a surface of the end cap close to the shell is provided with an annular protrusion extending in a circumferential direction of the end cap; the annular protrusion shrinks inwards relative to an edge of the end cap to form a flange between an outer side of the annular protrusion and the edge of the end cap; the flange is arranged on a shell wall of the shell, and the annular protrusion extends into the shell; and the insulating member is arranged in a groove enclosed by the annular protrusion, and the inner terminal is arranged on the insulating member. In the battery cell, the annular protrusion is provided on an inner surface of the end cap to form the groove to avoid taking up the space in cavity, thereby increasing the energy density of the battery cell.

## Description

### Cross-Reference to Related Applications

The present application is based on and claims priority to Chinese patent application No. 202220226628.3 filed on January 27, 2022, the disclosure of which is incorporated herein in its entirety.

### Technical Field

The present application relates to the technical field of batteries, and in particular to a battery cell, a battery and a power consuming device.

### Background Art

Achieving energy conservation and emission reduction is the key to the sustainable development of automotive industry. Electric vehicles have become an important part of the sustainable development of the automotive industry due to their advantages in energy conservation and environmental protection.

For the electric vehicles, the endurance mileage of electric vehicle is an important factor to their development. In order to increase the endurance mileage of electric vehicle, the energy density of battery needs to be increased.

### Summary of the Invention

In view of the problem described above, the present application provides a battery cell, a battery and a power consuming device, in order to increase the energy density of battery.

A first aspect of the present application provides a battery cell including a shell and an end cap assembly, the shell being provided with an opening, and the end cap assembly including an end cap, an insulating member and an inner terminal, wherein the end cap is arranged at the opening, and a surface of the end cap close to the shell is provided with an annular protrusion extending in a circumferential direction of the end cap; the annular protrusion shrinks inwards relative to an edge of the end cap to form a flange between an outer side of the annular protrusion and the edge of the end cap, the flange being arranged on a shell wall of the shell, and the annular protrusion extending into the shell; and the insulating member is arranged in a groove enclosed by the annular protrusion, and the inner terminal is arranged on the insulating member.

In the technical solution of the present application, in the battery cell, the annular protrusion is provided on an inner surface of the end cap to form the groove to avoid taking up the space in cavity, thereby increasing the energy density of the battery cell.

In some embodiments, in a thickness direction of the end cap, the flange includes a melt region close to the shell and a non-melt region away from the shell, the melt region being connected to the shell by means of laser welding. The portion of the flange away from the shell forms the non-melt region, so that the distance between a laser welding apparatus and the terminal, which avoids damage to the terminal during welding.

In some embodiments, the melt region has a smaller thickness than the non-melt region. The configuration of the non-melt region to have a larger thickness can better avoid damage to the terminal during welding.

In some embodiments, the thickness of the melt region ranges from 0.1 mm to 0.5 mm, and the thickness of the non-melt region ranges from 0.5 mm to 3.5 mm. This configuration can avoid damage to the terminal during laser welding while ensuring the strength of connection between the end cap 221 and the shell.

In some embodiments, an outer wall of the annular protrusion is at least partially attached to an inner wall of the shell. The arrangement of the outer wall of the annular protrusion to be at least partially attached to the inner wall of the shell can improve the sealing performance of the inner cavity of the battery cell. Moreover, the arrangement of the outer wall of the annular protrusion to be attached to the inner wall of the shell can prevent laser from entering the shell through the gap between the annular protrusion and the shell and thus causing damage to the electrode assembly.

In some embodiments, in the thickness direction of the end cap, the outer wall of the annular protrusion includes a first section and a second section, the first section being attached to the inner wall of the shell, and the second section being inclined inwards relative to the inner wall of the shell. During assembly of the end cap, since the second section firstly enters the shell, the arrangement of the second section to be inclined inwards can guide the entry of the end cap into the shell, thereby improving the efficiency of entry into the shell.

In some embodiments, the first section includes a welding region close to the flange and a buffer region away from the flange, the welding region being connected to the shell by means of laser welding. In this way, during laser welding, the laser consumes its energy when passing through the gap in the buffer region, which avoids damage to the internal electrode assembly.

In some embodiments, the welding region has a smaller thickness than the buffer region. The configuration of the buffer region to have a larger thickness can further prevent laser from entering the inner cavity and thus causing damage to the internal electrode assembly.

In some embodiments, the thickness of the welding region ranges from 0.1 mm to 1.5 mm, and the thickness of the buffer region ranges from 1.5 mm to 3.5 mm. This configuration can avoid taking up excessive space in the inner cavity due to the thickness of the annular protrusion while preventing laser from entering the inner cavity and thus causing damage to the electrode assembly.

In some embodiments, the battery cell further includes an electrode assembly arranged in the shell, the electrode assembly including a main body portion and tabs protruding from the main body portion, the insulating member including a first accommodation recess that is recessed towards a side away from the electrode assembly, and the tabs being arranged in the first accommodation recess and electrically connected to the inner terminal.

In some embodiments, the insulating member further includes a second accommodation recess. The second accommodation recess is arranged in a bottom face of the first accommodation recess and recessed towards the side away from the electrode assembly, and the inner terminal is arranged in the second accommodation recess. The arrangement of the insulating member to be provided with the first accommodation recess for accommodating the tabs can avoid taking up the space due to the connection of the tabs with the inner terminal, thereby further increasing the energy density of the battery cell.

In some embodiments, the shell includes two openings arranged opposite each other, and the battery cell includes two end cap assemblies corresponding to the two openings. The two end cap assemblies are respectively provided with two outer terminals. This may facilitate interconnection of multiple battery cells.

A second aspect of the present application provides a battery including the battery cell described above.

A third aspect of the present application provides a power consuming device, which includes the battery cell or battery described above for supplying electric energy.

The aforementioned description is merely an overview of the technical solutions of the present application. To understand the technical means of the present application more clearly to implement the technical solutions according to the content of the specification, and to make the above and other objectives, features and advantages of the present application more readily understandable, the detailed description of embodiments of the present application will be specifically described below.

### Brief Description of the Drawings

To describe the technical solutions of the embodiments of the present application more clearly, the drawings required in the embodiments of the present application will be illustrated briefly below. Obviously, the drawings illustrated below merely show some embodiments of the present application, and for those of ordinary skill in the art, other drawings can be obtained on the basis of these drawings without any creative efforts.
FIG. 1 is a schematic diagram of a structure of a vehicle according to some embodiments of the present application;
FIG. 2 is a schematic exploded view of a structure of a battery according to some embodiments of the present application;
FIG. 3 is a schematic perspective view of a structure of a battery cell according to some embodiments of the present application;
FIG. 4 is a schematic exploded view of a structure of an end cap assembly of a battery cell according to some embodiments of the present application;
FIG. 5 is a front view of an end cap assembly according to some embodiments of the present application;
FIG. 6 is a cross-sectional view along line A-A of the end cap assembly shown in FIG. 5;
FIG. 7 is a schematic partial enlarged view of a structure of part M in FIG. 6;
FIG. 8 is a side view of an end cap assembly according to some embodiments of the present application;
FIG. 9 is a front view of a battery cell according to some embodiments of the present application;
FIG. 10 is a cross-sectional view along line B-B of the battery cell shown in FIG. 9;
FIG. 11 is a schematic partial enlarged view of a structure of part N in FIG. 10;
FIG. 12 is a schematic diagram of welding of the end cap assembly shown in FIG. 11; and
FIG. 13 is a schematic diagram of a structure of some embodiments of an electrode assembly in a battery cell.

In the drawings, the figures are not drawn to scale.

### List of reference signs:

1000. vehicle;
100. battery; 200. controller; 300. motor;
10. case; 11. first portion; 12. second portion;
20. battery cell; 21. shell; 22. end cap assembly; 221. end cap; 2211. annular protrusion; 2211A. first section; 2211B. second section; 2212. flange; 2213. first terminal hole; 222. insulating member; 2221. first accommodation recess; 2222. second accommodation recess; 2223. second terminal hole; 223. inner terminal; 23. outer terminal; 24. electrode assembly; 241. main body portion; 242. tab.

### Detailed Description of Embodiments

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include/comprise" and "has/have" and any variations thereof in the specification and the claims of the present application and in the foregoing brief description of the drawings are intended to cover non-exclusive inclusions.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "multiple" means two or more, unless otherwise explicitly and specifically defined.

The phrase "embodiment" mentioned herein means that the specific features, structures or characteristics described with reference to the embodiment can be encompassed in at least one embodiment of the present application. The phrase at various locations in the specification does not necessarily refer to the same embodiment, or an independent or alternative embodiment exclusive of other embodiments. Those skilled in the art understand explicitly or implicitly that the embodiments described herein may be combined with other embodiments.

In the description of the embodiments of the present application, the term "and/or" is merely intended to describe the associated relationship of associated objects, indicating that three relationships may exist. For example, A and/or B may include: only A exists, both A and B exist, and only B exists. In addition, the character "/" herein generally indicates an "or" relationship between the associated objects.

In the description of the embodiments of the present application, the term "multiple" means two or more (including two), similarly the term "multiple groups" means two or more groups (including two groups), and the term "multiple pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the drawings and are merely intended to facilitate and simplify the description of the embodiments of the present application, rather than indicating or implying that the device or element referred to must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense. For example, they may be a fixed connection, a detachable connection, or an integrated connection; may be a mechanical connection or an electric connection; and may be a direct connection, or may be an indirect connection by means of an intermediate medium, or may be communication between interiors of two elements or interaction between the two elements. For those of ordinary skill in the art, the specific meanings of the foregoing terms in the embodiments of the present application can be understood according to specific circumstances.

An existing battery cell generally includes a shell, an end cap, and an electrode assembly which is accommodated in the shell. The end cap is arranged at the opening of the shell, so that the end cap and the shell enclose together to form a closed cavity to allow the electrode assembly to be arranged in the cavity in a closed manner. In the related art known to the inventor, the inner surface of the end cap includes a protrusion in the thickness direction, and when the end cap is mounted at the opening of the shell, the protrusion extends into the shell to take up part of the space in the cavity and then cause loss of energy density of the battery cell.

To solve the problem described above, the inventor of the present application has proposed to form a groove in an inner surface of an end cap to avoid taking up the space in the cavity, thereby increasing the energy density of a battery cell.

A battery cell disclosed in an embodiment of the present application may be used in, but not limited to, vehicles, ships, aircrafts or other power consuming devices. It is possible to use a power system, which is composed of a battery cell, a battery and the like, of the power consuming device disclosed in the present application.

The embodiments of the present application provide a power consuming device which uses a battery cell and/or a battery as a power source. The power consuming device may be, but not limited to, a cell phone, a tablet, a notebook computer, an electric toy, an electric tool, an electric scooter, an electric vehicle, a ship, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

For ease of description of the following embodiments, an example in which a power consuming device according to an embodiment of the present application is a vehicle 1000 is taken for description.

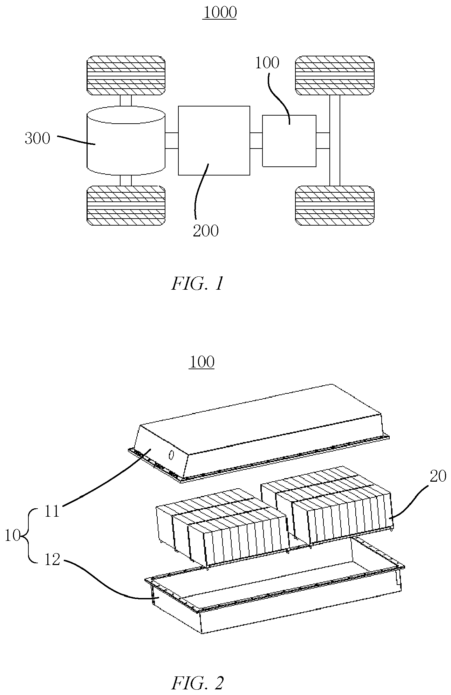

Referring to FIG. 1, FIG. 1 is a schematic diagram of a structure of a vehicle 1000 according to some embodiments of the present application. The vehicle 1000 may be a fuel vehicle, a gas vehicle or a new energy vehicle. The new energy vehicle may be a battery electric vehicle, a hybrid electric vehicle, an extended-range vehicle, etc. A battery 100 is provided inside the vehicle 1000, and the battery 100 may be arranged at the bottom, the front or the back of the vehicle 1000. The battery 100 may be configured to supply power to the vehicle 1000. For example, the battery 100 may serve as an operating power supply for the vehicle 1000. The vehicle 1000 may further include a controller 200 and a motor 300. The controller 200 is configured to control the battery 100 to power the motor 300 to meet working power requirements during starting, navigation or traveling of the vehicle 1000, for example.

In some embodiments of the present application, the battery 100 may not only serve as an operating power supply for the vehicle 1000, but also serve as a driving power supply for the vehicle 1000, in place of or partially in place of fuel or natural gas, to supply driving power to the vehicle 1000.

Referring to FIG. 2, FIG. 2 is an exploded view of a battery 100 according to some embodiments of the present application. The battery 100 includes a case 10 and battery cells 20. The battery cells 20 are accommodated in the case 10. The case 10 is configured to provide an accommodation space for the battery cells 20, and the case 10 may be of various structures. In some embodiments, the case 10 may include a first portion 11 and a second portion 12, the first portion 11 and the second portion 12 being fitted to each other in a covering manner, and the first portion 11 and the second portion 12 jointly defining the accommodation space for accommodating the battery cells 20. The second portion 12 may be of a hollow structure with one end open, the first portion 11 may be of a plate-like structure, and the first portion 11 is fitted to the open side of the second portion 12 in a covering manner, such that the first portion 11 and the second portion 12 jointly define the accommodation space. Alternatively, both the first portion 11 and the second portion 12 may be of a hollow structure with one side open, and the open side of the first portion 11 is fitted to the open side of the second portion 12 in a covering manner. Of course, the case 10 formed by the first portion 11 and the second portion 12 may be in various shapes such as a cylinder and a cuboid.

In the battery 100, multiple battery cells 20 may be provided, and the multiple battery cells 20 may be in series connection, in parallel connection or in series-parallel connection. The series-parallel connection means that some of the multiple battery cells 20 are in series connection and some are in parallel connection. The multiple battery cells 20 may be directly combined together in series connection, in parallel connection or in series-parallel connection, and then a unit consisting of the multiple battery cells 20 is accommodated in the case 10. Of course, the battery 100 may also be formed in such a way that multiple battery cells 20 are firstly in series connection, in parallel connection or in series-parallel connection to form a battery module, and then multiple battery modules are in series connection, in parallel connection or in series-parallel connection to form a unit and are accommodated in the case 10. The battery 100 may further include other structures. For example, the battery 100 may further include a busbar component configured to achieve electrical connection between the multiple battery cells 20.

The case 10 may be a part of the battery 100, and the case 10 is detachably mounted to the power consuming device. Alternatively, the case 10 may also be a space which is formed by a structural member in the power consuming device to accommodate the battery cells 20. For example, when the battery cells 20 is used in the vehicle 1000, the case 10 is a space which is formed by a vehicle frame to accommodate the battery cells 20.

Each battery cell 20 may be a secondary battery or a primary battery; or may be a lithium-sulfur battery, a sodium-ion battery or a magnesium-ion battery, but is not limited thereto. The battery cell 20 may be cylindrical, flat, rectangular, or in other shapes.

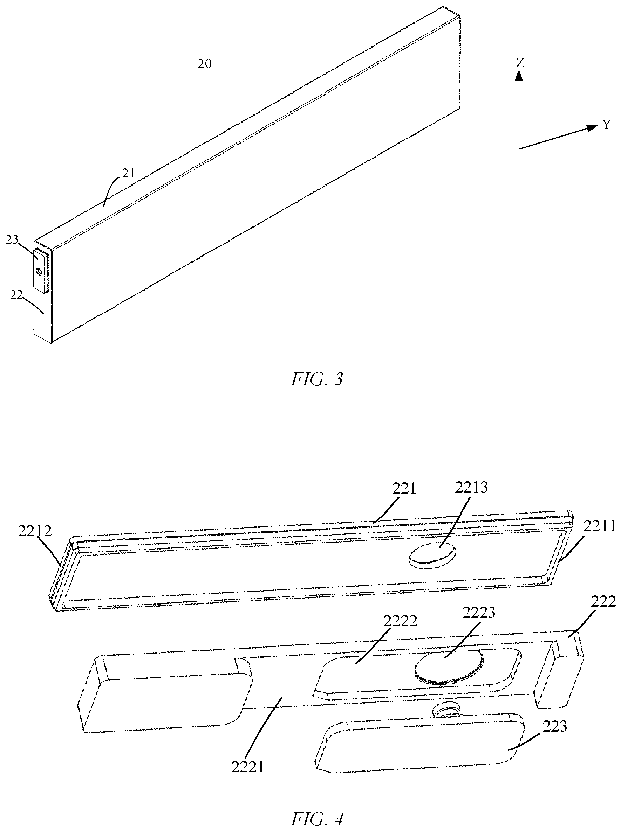

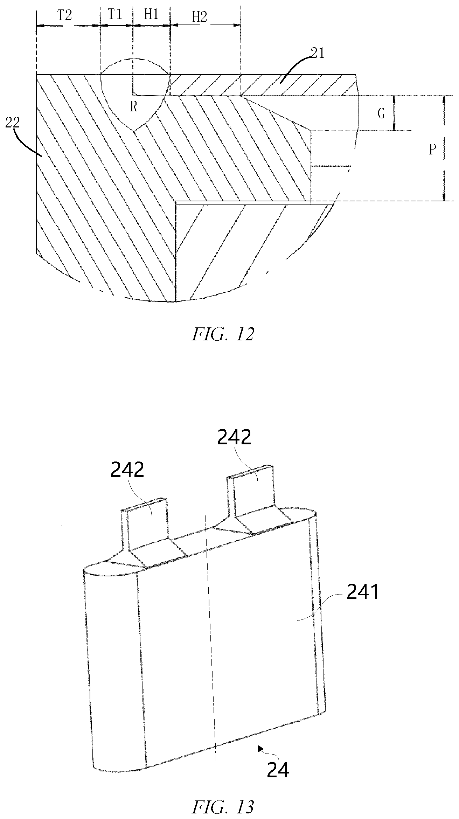

Referring to FIG. 3, FIG. 3 is a schematic perspective view of a structure of a battery cell 20 according to some embodiments of the present application. As shown in FIG. 3, the battery cell 20 includes a shell 21, an end cap assembly 22, an outer terminal 23, an electrode assembly 24 (as shown in FIG. 13) and other functional components.

The electrode assembly 24 is a component of the battery cell 20 where an electrochemical reaction occurs. The electrode assembly 24 is mainly formed by winding or stacking a positive electrode plate and a negative electrode plate, and a separator is commonly provided between the positive electrode plate and the negative electrode plate. The portions of the positive electrode plate and the negative electrode plate having an active material form a main body portion 241 of the electrode assembly 24, and the portions of the positive electrode plate and the negative electrode plate having no active material respectively form tabs 242. During the charging and discharging of the battery 100, a positive active material and a negative active material react with an electrolyte, and the tabs 242 are connected to the terminal to form a current loop.

The shell 21 is an assembly that creates an internal environment of the battery cell 20 in which the electrode assembly 24, the electrolyte and other components can be accommodated. One or more electrode assemblies 24 can be held in the shell 21. The shell 21 may be made of various materials, such as copper, iron, aluminum, stainless steel, an aluminum alloy, and plastic, which will not be specially limited in the embodiments of the present application.

The end cap assembly 22 refers to a component that is fitted to an opening of the shell 21 in a covering manner to isolate the internal environment of the battery cell 20 from the external environment. Without limitation, the end cap assembly 22 may be shaped to adapt to the shape of the shell 21 to match the shell 21.

As shown in FIG. 4, the outer terminal 23 is arranged on the end cap assembly 22 and connected to the inner terminal 223 for electrical connection with the outside.

Referring to FIGS. 3 to 8, the battery cell 20 includes the shell 21 and the end cap assembly 22. The shell 21 is provided with an opening. The end cap assembly 22 includes an end cap 221, an insulating member 222 and an inner terminal 223. The end cap 221 is arranged at the opening, and a surface of the end cap 221 close to the shell 21 is provided with an annular protrusion 2211 extending in a circumferential direction of the end cap 221. The annular protrusion 2211 shrinks inwards relative to an edge of the end cap 221 to form a flange 2212 between an outer side of the annular protrusion 2211 and the edge of the end cap 221. The flange 2212 is arranged on a shell wall of the shell 21, and the annular protrusion 2211 extends into the shell 21. The insulating member 222 is arranged in a groove enclosed by the annular protrusion 2211. The inner terminal 223 is arranged on the insulating member 222.

As shown in FIG 3, the shell 21 is a square shell. The shell 21 is provided with two openings in communication with each other in a length direction Y, and two end cap assemblies 22 are respectively fitted to the two openings in a covering manner. The two end cap assemblies 22 are respectively provided with two outer terminals 23, the two outer terminals 23 are respectively connected to the two inner terminals 223 of the two end cap assemblies 22, and the two inner terminals 223 are respectively connected to a positive tab and a negative tab of the electrode assembly 24. In other embodiments not shown in the figure, the shell 21 may also be provided with only one opening, the end cap assembly 22 is fitted to the opening in a covering manner, and then the end cap assembly 22 is provided with two outer terminals 23 spaced apart from each other.

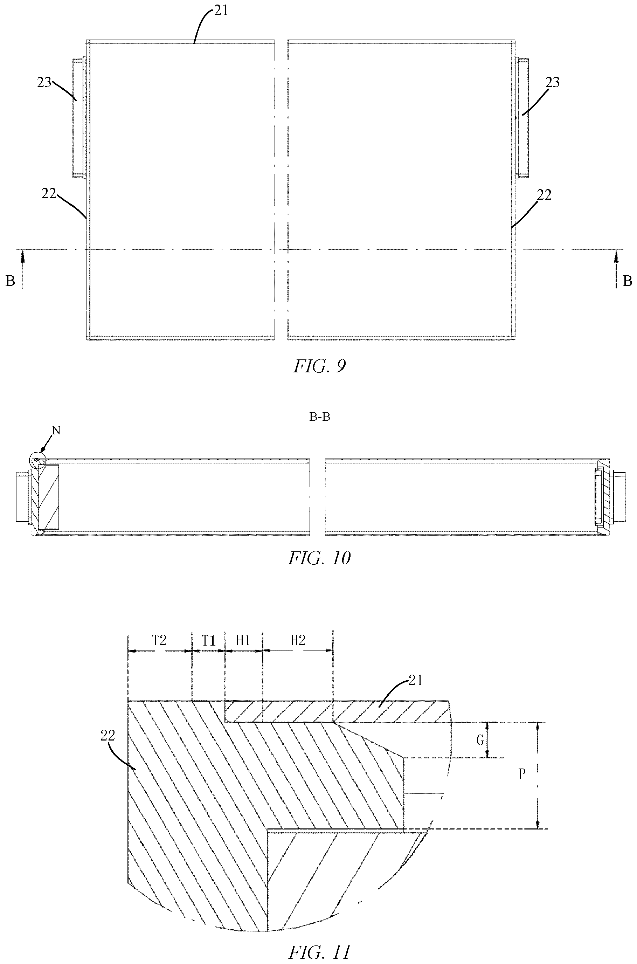

As shown in FIG. 4, the end cap assembly 22 includes an end cap 221, an insulating member 222 and an inner terminal 223. A surface of the end cap 221 close to the shell 21 is provided with an annular protrusion 2211 extending in a circumferential direction of the end cap. The annular protrusion 2211 shrinks inwards relative to an edge of the end cap 221 to form a flange 2212 between an outer side of the annular protrusion 2211 and the edge of the end cap 221. Here, the annular protrusion 2211 shrinks inwards relative to the edge of the end cap 221 in the circumferential direction. In this way, the interior of the annular protrusion 2211 forms a groove in which the insulating member 222 is arranged to reduce the space to be occupied by the end cap assembly 22. Referring to FIGS. 11 and 12, the distance between the bottom face of the groove formed by the annular protrusion 2211 and the outer surface of the end cap 221 is greater than the distance between the end face of the flange 2212 and the outer surface of the end cap 221. That is to say, although the groove is formed in the inner surface of the end cap 221, the bottom face of the groove and the end face of the flange 2212 are not coplanar, which ensures the strength of the end cap 221.

The end cap 221 is shaped to adapt to the shape of the opening of the shell 21, and in this embodiment, the opening of the shell 21 is square, and then the end cap 221 is also square. Correspondingly, the annular protrusion 2211 is also square. In other embodiments not shown in the figure, since the shell 21 is cylindrical, the end cap 221 is round, and the annular protrusion 2211 is also round. Optionally, the end cap 221 may be made of a material (e.g., an aluminum alloy) with a certain hardness and strength. In this way, the end cap 221 is less likely to deform when being pressed or collided, so that the battery cell 20 can have higher structural strength and then have improved safety performance. In some embodiments, the end cap 221 may be further provided with a pressure relief mechanism that is configured to release the internal pressure when the internal pressure or temperature of the battery cell 20 reaches a threshold. The end cap 221 may also be made of various materials, such as copper, iron, aluminum, stainless steel, an aluminum alloy, and plastic, which will not be specially limited in the embodiments of the present application. The insulating member 222 may be configured to isolate electrical connection components in the shell 21 from the end cap 221 to reduce the risk of short circuit. For example, the insulating member may be made of plastic, rubber, etc.

During assembly of the battery cell 20 of the embodiments of the present application, the flange 2212 of the end cap 221 abuts against the shell wall of the shell 21, the annular protrusion 2211 extends into the shell 21, and the flange 2212 and the annular protrusion 2211 are both connected to the shell 21 to achieve connection between the end cap 221 and the shell 21. In the battery cell 20 of the embodiments of the present application, the inner surface of the end cap 221 is provided with the annular protrusion to form the groove, which reduces the occupied space of the internal cavity of the shell 21, thereby increasing the energy density of the battery cell 20. Moreover, the annular protrusion 2211 can still be connected to the shell wall of the shell 21 to ensure the strength of connection between the end cap 221 and the shell 21.

In some embodiments, referring to FIGS. 9 to 11, the outer wall of the annular protrusion 2211 is at least partially attached to the inner wall of the shell 21.

As shown in FIG. 12, the outer wall of the annular protrusion 2211 is at least partially attached to the inner wall of the shell 21. When the end cap 221 is connected to the shell 21 by means of laser welding, in the melt portion R as shown in FIG. 12, it can be seen that the portion of the annular protrusion 2211 close to the flange 221 is melted and connected to the inner wall of the shell 21.

The arrangement of the outer wall of the annular protrusion 2211 to be at least partially attached to the inner wall of the shell 21 can improve the sealing performance of the inner cavity of the battery cell 20. Moreover, the arrangement of the outer wall of the annular protrusion 2211 to be attached to the inner wall of the shell 21 can prevent laser from entering the shell 21 through the gap between the annular protrusion 2211 and the shell 21 and thus causing damage to the electrode assembly 24.

In some embodiments, in the thickness direction of the end cap 221, the outer wall of the annular protrusion 2211 includes a first section 2211A and a second section 2211B, the first section 2211A being attached to the inner wall of the shell 21, and the second section 2211B being inclined inwards relative to the inner wall of the shell 21.

As shown in FIG. 11, during assembly of the end cap 221, since the second section 2211B firstly enters the shell 21, the arrangement of the second section 2211B to be inclined inwards may guide the entry of the end cap 221 into the shell, thereby improving the efficiency of entry into the shell. Specifically, the distance G between an end portion of the second section 2211B and the inner wall of the shell 21 is in the range of 1 mm ≤ G1 ≤ the width P of the annular protrusion 2211.

The arrangement of the second section 2211B to be inclined inwards may guide the entry of the end cap 221 into the shell, thereby improving the efficiency of entry into the shell.

In some embodiments, as shown in FIG. 13, the battery cell 20 further includes an electrode assembly 24 arranged in shell 21. The electrode assembly 24 includes a main body portion 241 and tabs 242 extending from the main body portion 241. As shown in FIG. 4, the insulating member 222 includes a first accommodation recess 2221 recessed towards the side away from the electrode assembly 24. The tabs 242 are arranged in the first accommodation recess 2221 and electrically connected to the inner terminal 223.

The arrangement of the insulating member 222 to be provided with the first accommodation recess 2221 for accommodating the tabs 242 can avoid taking up the space due to the connection of the tabs 242 with the inner terminal 223, thereby further increasing the energy density of the battery cell 20.

In some embodiments, the insulating member 222 further includes a second accommodation recess 2222 that is arranged on the bottom face of the first accommodation recess 2221 and recessed towards the side away from the electrode assembly 24, and the inner terminal 223 is arranged in the second accommodation recess 2222.

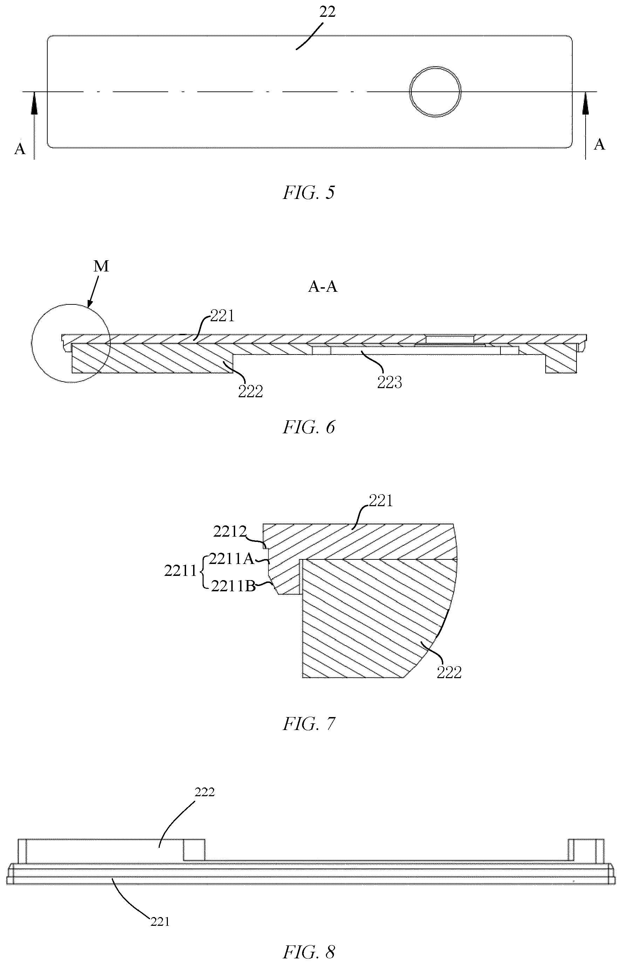

The second accommodation recess 2222 is recessed, relative to the bottom face of the first accommodation recess 2221, towards the side away from the electrode assembly 24. As shown in FIG. 6, after the inner terminal 223 is placed in the second accommodation recess 2222, the surface of the inner terminal 223 is flush with the bottom face of the first accommodation recess 2221. In this way, the inner terminal 223 does not need to take up excessive space.

As shown in FIG. 4, the end cap 221 is provided with a first terminal hole 2213, the insulating member 222 is provided with a second terminal hole 2223 coaxially arranged with the first terminal hole 2213, and the inner terminal 223 sequentially passes through the second terminal hole 2223 and the first terminal hole 2213 and is then connected to the outer terminal 23. In this embodiment, the terminals include the inner terminal 223 and the outer terminal 23. In a height direction Z, the terminals are offset to one side relative to the center of the battery cell 20. This arrangement facilitates reduction of the length of an adapter plate when the tabs 242 of the electrode assembly 24 extend from one side in the height direction Z and need to be connected to the inner terminal 223 by means of the adapter plate. Moreover, the arrangement of the terminals to be offset to one side facilitates the arrangement of an explosion-proof valve and other components on the end cap 221.

The inventor has found in his research that the arrangement of the terminals to be offset may cause the terminals to be positioned close to the edge of the end cap 221, which may cause damage to the terminals during welding of the end cap 221 and the shell 21. To address this issue, referring to FIGS. 11 and 12, in some embodiments, in the thickness direction of the end cap 221, the flange 2212 includes a melt region T1 close to the shell 21 and a non-melt region T2 away from the shell 21, the melt region T1 being connected to the shell 21 by means of laser welding. That is to say, since the flange 2212 has an increased thickness, the melt region T1 of the flange 2212 close to the shell 21 is melted under the laser action and then connected to the shell 21, and the portion of the flange 2212 away from the shell 21 forms a non-melt region T2, so that the distance between a laser welding apparatus and the terminal is increased, which avoids damage to the terminal during welding.

In some embodiments, the melt region T1 has a smaller thickness than the non-melt region T2. The configuration of the non-melt region T2 to have a larger thickness can better avoid damage to the terminal during welding.

In some embodiments, the thickness of the melt region T1 ranges from 0.1 mm to 0.5 mm, and the thickness of the non-melt region T2 ranges from 0.5 mm to 3.5 mm. This thickness configuration can avoid damage to the terminal during laser welding while ensuring the strength of connection between the end cap 221 and the shell 21.

To prevent laser from entering the shell 21 through the gap between the annular protrusions 2211 and the inner wall of the shell 21 during welding and thus causing damage to the internal electrode assembly 24, in some embodiments, the first section 2211A of the annular protrusion 2211 includes a welding region H1 close to the flange 2212 and a buffer region H2 away from the flange 2212, the welding region H1 being connected to the shell 21 by means of laser welding. As shown in FIG. 12, in this way, during laser welding, even if the annular protrusion 2211 is not completely attached to the shell 21, laser can consume its energy when passing through the gap in the buffer region H2, which avoids damage to the internal electrode assembly 24. Moreover, this configuration increases the thickness of the annular protrusion 2211 and then increases the clamping area during assembly, thereby improving the assembly efficiency. Moreover, since the annular protrusion 2211 has an increased thickness, the end portion of the second section 2211B close to the first section 2211A can be further arranged towards one side of the first section 2211A, so that the area of the gap between the second section 2211B and the inner wall of the shell 21 is increased, thereby further improving the efficiency of entry into the shell.

In some embodiments, the welding region H1 has a smaller thickness than the buffer region H2. The configuration of the buffer region H2 to have a larger thickness can prevent laser from entering the inner cavity and thus causing damage to the internal electrode assembly.

In some embodiments, the thickness of the welding region H1 ranges from 0.1 mm to 1.5 mm, and the thickness of the buffer region H2 ranges from 1.5 mm to 3.5 mm. This configuration can prevent laser from entering the inner cavity and thus causing damage to the electrode assembly 24, and avoid taking up excessive space in the inner cavity due to the thickness of the annular protrusion 2211.

In some embodiments, the shell 21 includes two openings arranged opposite each other, and the battery cell 20 includes two end cap assemblies 22 corresponding to the two openings. The two end cap assemblies 22 are respectively provided with two outer terminals 23. This may facilitate interconnection of multiple battery cells 20.

The present application provides a battery 100 including the battery cell 20 described above.

The present application further provides a power consuming device, which includes the battery cell 20 and/or the battery 100 described above for supplying electric energy.

Although the present application has been described with reference to the preferred embodiments, various modifications can be made, and equivalents can be provided to substitute for the components thereof without departing from the scope of the present application. In particular, the technical features mentioned in the embodiments can be combined in any manner, as long as there is no structural conflict. The present application is not limited to the specific embodiments disclosed herein but includes all the technical solutions that fall within the scope of the claims.

## Claims

1. A battery cell (20), comprising:
a shell (21) provided with an opening; and
an end cap assembly (22), which comprises an end cap (221), an insulating member (222) and an inner terminal (223), wherein the end cap (221) is arranged at the opening, and a surface of the end cap (221) close to the shell (21) is provided with an annular protrusion (2211) extending in a circumferential direction of the end cap (221); the annular protrusion (2211) shrinks inwards relative to an edge of the end cap (221) to form a flange (2212) between an outer side of the annular protrusion (2211) and the edge of the end cap (221); the flange (2212) is arranged on a shell wall of the shell (21), and the annular protrusion (2211) extends into the shell (21); and the insulating member (222) is arranged in a groove enclosed by the annular protrusion (2211), and the inner terminal (223) is arranged on the insulating member (222).

2. The battery cell (20) according to claim 1, wherein the flange (2212) comprises, in a thickness direction of the end cap (221), a melt region (T1) close to the shell (21) and a non-melt region (T2) away from the shell (21), the melt region (T1) being connected to the shell (21) by means of laser welding.

3. The battery cell (20) according to claim 2, wherein the melt region (T1) has a smaller thickness than the non-melt region (T2).

4. The battery cell (20) according to claim 3, wherein the thickness of the melt region (T1) ranges from 0.1 mm to 0.5 mm, and the thickness of the non-melt region (T2) ranges from 0.5 mm to 3.5 mm.

5. The battery cell (20) according to any one of claims 1 to 4, wherein an outer wall of the annular protrusion (2211) is at least partially attached to an inner wall of the shell (21).

6. The battery cell (20) according to claim 5, wherein the outer wall of the annular protrusion (2211) comprises, in the thickness direction of the end cap (221), a first section (2211A) and a second section (2211B), the first section (2211A) being attached to the inner wall of the shell (21), and the second section (2211B) being inclined inwards relative to the inner wall of the shell (21).

7. The battery cell (20) according to claim 6, wherein the first section (2211A) comprises a welding region (H1) close to the flange (2212) and a buffer region (H2) away from the flange (2212), the welding region (H1) being connected to the shell (21) by means of laser welding.

8. The battery cell (20) according to claim 7, wherein the welding region (H1) has a smaller thickness than the buffer region (H2).

9. The battery cell (20) according to claim 8, wherein the thickness of the welding region (H1) ranges from 0.1 mm to 1.5 mm, and the thickness of the buffer region (H2) ranges from 1.5 mm to 3.5 mm.

10. The battery cell (20) according to any one of claims 1 to 9, further comprising an electrode assembly (24) arranged in the shell (21), wherein the electrode assembly (24) comprises a main body portion (241) and tabs (242) protruding from the main body portion (241), the insulating member (222) comprising a first accommodation recess (2221) recessed towards a side away from the electrode assembly (24), and the tabs (242) being arranged in the first accommodation recess (2221) and electrically connected to the inner terminal (223).

11. The battery cell according to claim 10, wherein the insulating member (222) further comprises a second accommodation recess (2222), the second accommodation recess (2222) being arranged in a bottom face of the first accommodation recess (2221) and recessed towards the side away from the electrode assembly (24), and the inner terminal (223) being arranged in the second accommodation recess (2222).

12. The battery cell (20) according to any one of claims 1 to 11, the shell (21) comprises two openings arranged opposite each other, and the battery cell (20) comprises two end cap assemblies (22) corresponding to the two openings.

13. A battery (100), comprising a battery cell (20) of any one of claims 1 to 12.

14. A power consuming device, comprising a battery cell (20) of any one of claims 1 to 12 and/or a battery (100) of claim 13 for supplying electric energy.
